# EUROPÄISCHE PATENTSCHRIFT

(11) **EP 1 292 513 B1**
(45) Veröffentlichungstag und Bekanntmachung des Hinweises auf die Patenterteilung: **01.12.2004**
(21) Anmeldenummer: 01943481.0
(22) Anmeldetag: 07.06.2001
(51) Int. Cl.: B65D 83/14, G05D 16/10

(54) **Aerosoldose mit Druckreduzierventil und Druckreduzierventil**
Aerosol spray can with pressure reducing valve and pressure reducing valve
Bombe aérosol munie d'un détendeur et détendeur

(30) Priorität: 14.06.2000 DE 10029228
(43) Veröffentlichungstag der Anmeldung: 19.03.2003
(73) Patentinhaber: Thomas GmbH, 63505 Langenselbold (DE)
(72) Erfinder: SCHNEIDER, Heinz, 63505 Langenselbold (DE)
(74) Vertreter: Erb, Henning
(86) Internationale Anmeldenummer: PCT/EP2001/006423
(87) Internationale Veröffentlichungsnummer: WO 2001/096208

(56) Entgegenhaltungen:
- DE-U- 29 823 474
- FR-A- 2 774 077

## Beschreibung

Die Erfindung befaßt sich mit einer Aerosolsprühdose mit einem Druckreduzierventil zwischen dem Doseninneren und einem Sprühventil, wobei in Ausströmrichtung hinter einer Schließstelle zur Druckregulierung eine Druckkammer vorgesehen ist, in welcher ein Kolben beweglich ist, der bei über den Regeldruck ansteigendem Druck in der Druckkammer die Schließstelle gegen die Last einer Feder, z. B. einer Schraubenfeder oder einer Druckgasfeder verschließt.

Zur Druckregulierung bei.mit komprimierten Gasen befüllten Aerosoldosen ist es notwendig, den Sprühventilen ein Druckregulierventil vorzuschalten, das bei einem Fülldruck von ungefähr 10 bar der Dose einen Regeldruck von ungefähr 2 - 4 bar bereitstellt. Hierzu sind bereits Druckreduzierventile mit federbelasteten Kolben bekannt, die bei ansteigendem Regeldruck für das Verschließen einer druckregulierenden Schließstelle sorgen. Allerdings wird bei den bekannten Lösungen die Zylinder-/Kolbeneinheit von dem austretenden Aerosol umströmt, so daß eine aufwendige, doppelwandige Gehäusekonstruktion erforderlich ist. Eine solche Lösung ist z. B. in der WO 01/09009 A1 und auch in der FR 2 774 077 A1 beschrieben, wobei das in letzterer beschriebene Druckreduzierventil eine Kammer für die Regelfeder aufweist, die durch einen gesonderten Kanal mit der Umgebung in Verbindung steht.

Die Aufgabe der vorliegenden Erfindung besteht darin, eine Sprühdose mit einem Druckreduzierventil zu schaffen, die im Vergleich zu vorbekannten Ausführungen einfacher herzustellen ist.

Erfindungsgemäß wird die Aufgabe durch eine Sprühdose der eingangs beschriebenen Art gelöst, bei welcher die Verbindung zwischen der Schließstelle zu Druckregulierung und dem Sprühventil über eine mittige Bohrung in dem Kolben erfolgt.

Die erfindungsgemäße Aerosolsprühdose bietet den Vorteil, daß um die Zylinder-/Kolbeneinheit keine zusätzliche Gehäusewandung zur Durchleitung des Aerosols vorgesehen sein muß, wodurch sich der Herstellungsaufwand verringert. Die etwas größere Dicke beispielsweise einer zur Regulierung der Schließstelle verwendeten Kolbenstange ist dabei unproblematisch.

In einer bevorzugten Ausführungsform der erfindungsgemäßen . Aerosolsprühdose wird die Druckkammer nicht durchströmt, so daß eine Beeinflussung der Reguliergenauigkeit durch dynamische Vorgänge im Bereich des Kolbens weniger zu befürchten ist.

In einer besonders bevorzugten Ausführungsform der Erfindung ist vorgesehen, daß der Kolben des Druckreduzierventils von außen derart zugänglich ist, daß er mechanisch in seine die Schließstelle freigebende Position beweglich ist.

Eine derartige Ausführungsform, die sich bei außen umströmten Druckreduzierventil nur mit hohem Aufwand erreichen läßt, ermöglicht einen problemlosen Füllvorgang, in dem verhindert wird, daß sich unter der dann sehr hohen Druckbeaufschlagung von außen der Kolben in seine Schließstellung oder zumindest in eine Stellung bewegen kann, in welcher der Öffnungsquerschnitt verringert und damit der Füllvorgang erschwert ist.

Ein Endanschlag begrenzt vorzugsweise einen Öffnungshub des Kolbens, um Beschädigungen an undefinierten Berührungsstellen zwischen Kolben und Gehäuse zu verhindern.

Alternativ zu einer mechanischen Verstellung des Kolbens in seiner die Schließstelle freigebende Position ist auch das Vorsehen einer Art von Überdruckventil denkbar, das bei einer den Doseninnendruck erheblich übersteigenden Druckbeaufschlagung von außen eine Öffnung zum Doseninneren freigibt. Allerdings bedeutet dies einen konstruktiven Mehraufwand.

In einer bevorzugten Ausführungsform der Erfindung ist vorgesehen, daß die Schließstelle zwischen einem an einem Gehäuse festgelegten Dichtelement und einer Kolbenstange oder einem separaten, axial durch den Kolben beweglichen Element gebildet ist.

Im einfachsten Fall können Kolben und Kolbenstange einstückig ausgebildet sein, wobei vorzugsweise das Dichtelement am Außenumfang der Kolbenstange anliegt und in der Schließstelle eine radiale Öffnung zu deren mittiger Bohrung verschließt. Bei einer solchen Lösung ist es auch denkbar, daß das Dichtelement bei einer den Doseninnendruck erheblich übersteigenden Druckbeaufschlagung von außen die Schließstelle frei gibt.

Alternativ ist es denkbar, daß zur Bildung der Schließstelle mit dem Dichtelement ein separates Schließelement vorgesehen ist, das durch eine Kolbenstange bei Druckabfall in eine von dem Dichtelement angehobene Stellung beweglich ist.

Die Verbindung zwischen der Druckkammer und den durchströmten Bereichen kann entweder über einen mit der Schließstelle in Verbindung stehenden Ringkanal um die Kolbenstange oder auch durch eine Radialbohrung in der Kolbenstange erfolgen, die für die notwendige Wirkverbindung sorgt, ohne daß die Druckkammer von dem ausströmenden Aerosol durchströmt würde. Bei Ausführungen von Kolbenstangen ohne Radialbohrungen sind diese an ihrer Stirnseite offen und in diesem Bereich seitlich geschlitzt ausgeführt, um den Durchstrom des Aerosols zu gewährleisten.

Ein besonderer Vorteil der erfindungsgemäßen Aerosolsprühdose besteht darin, daß ein Gehäuse für das Druckreduzierventil vorgesehen sein kann, welches das Dichtelement der Schließstelle hält und dessen Außenwandung innenseitig die Druckkammer begrenzt. Die als Schraubenfeder oder Druckgasfeder ausgebildete Feder des Druckreduzierventils ist zwischen dem Gehäuse und dem Kolben angeordnet, wobei sich die Feder vorzugsweise an einem Gehäuseeinsatz abstützt, der mit der Zylinderwandung des Gehäuses verrastet, verpresst, verschweißt und/oder verklebt ist. Der Raum zwischen dem Gehäuse und dem Kolben, in welchem die Feder angeordnet ist, ist vorzugsweise druckdicht zum Doseninneren abgedichtet, um eine Beeinflussung der Druckregulierung durch eindringendes Aerosol zu vermeiden. Die raumsparende Konstruktion des erfindungsgemäßen Druckventils einer Sprühdose erlaubt es, einen möglichst großen Kolbendurchmesser bei entsprechender Anpassung der Kraft der Kolbenfeder vorzusehen und dadurch die Reguliergenauigkeit zu optimieren.

In dem abgedichteten Raum zwischen Gehäuse und Kolben kann auch ein Druckgaspolster eingeschlossen sein, das eine Druckgasfeder bildet.

Nachfolgend wird anhand der beigefügten Zeichnungen näher auf Ausführungsbeispiele der Erfindung eingegangen. Es zeigen:
- Fig. 1: einen Querschnitt eines Druckreduzierventils einer Sprühdose im drucklosen, unbefüllten Zustand der Dose;
- Fig. 2: das Druckreduzierventil gemäß Fig. 1 nach dem Befüllen der Dose in geschlossener Ruhestellung;
- Fig. 3: einen Querschnitt einer weiteren Ausführungsform eines Druckreduzierventils bei druckloser, unbefüllter Sprühdose;
- Fig. 4: das Druckreduzierventil gemäß Fig. 3 in seiner Ruhestellung nach dem Befüllen der Sprühdose.

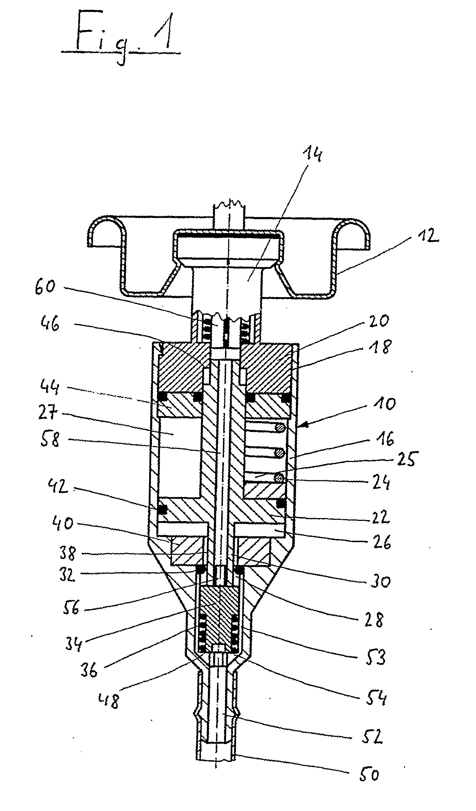

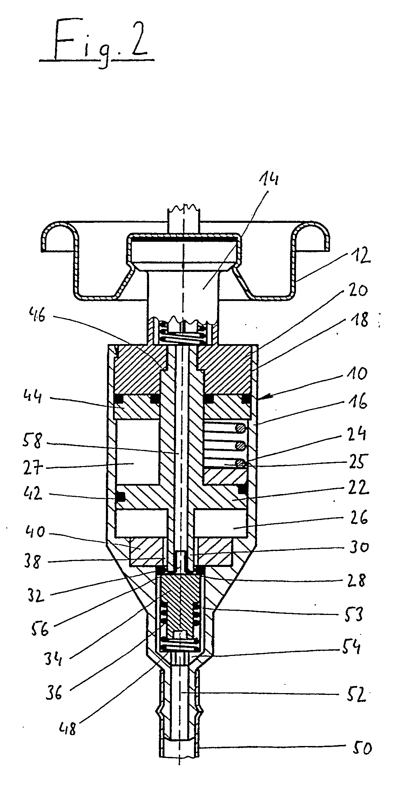

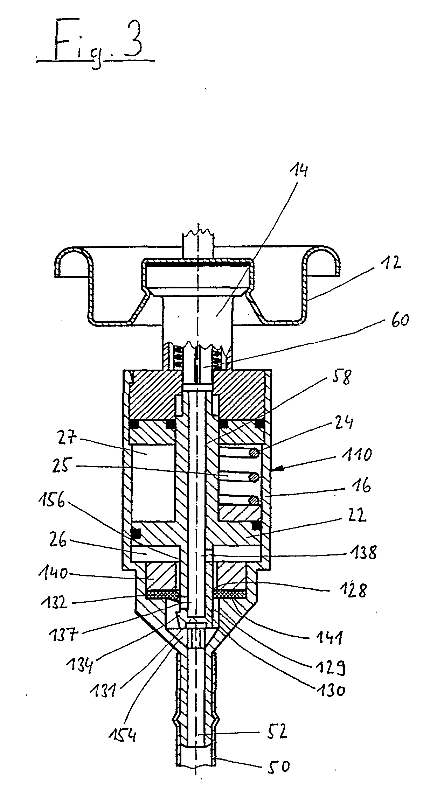

In Fig. 1 ist ein Druckreduzierventil 10 dargestellt, das abdichtend mit einem vorzugsweise aus Feinblech oder Aluminium bestehenden Ventildeckel 12 verbunden ist, der wiederum eine Aerosolsprühdose (nicht dargestellt) druckdicht verschließt. Im Kopfbereich des Druckreduzierventils 10 ist ein nicht näher dargestelltes Sprühventil vorgesehen, mit welchem nach Niederdrücken eines Sprühkopfes ein gezieltes Versprühen des Doseninhaltes ermöglicht ist.

Das Druckreduzierventil besteht im wesentlichen aus einem Gehäuse 16, das in seinem rückwärtigen, zylindrisch ausgebildeten Bereich 18 mit einem Gehäuseeinsatz 20 verschlossen ist, der die Verbindung zu dem Ventildeckel 12 herstellt und das Sprühventil 14 aufnimmt, einem beweglichen Kolben 22, der zwischen einer Druckfeder 24 und einem in einer Druckkammer 26 auf seine Kolbenfläche wirkenden Regeldruck im Gleichgewicht steht und einem Schließelement 28 zur Druckregulierung, das durch den Kolben 22 über eine Kolbenstange 30 betätigbar ist. Das Gehäuse 16 bildet.die Außenwandung der Druckkammer 26 und trägt einen als O-Ring ausgebildetes Dichtelement 32, das gemeinsam mit einem koaxial zu dem Kolben 22 in dem Gehäuse 16 beweglichen Schließelement 34 die Schließstelle 28 bildet. Eine Sicherheitsfeder 36 hält das Schließelement 34 bei unter Druckbeaufschlagung gegen die Last seiner Feder 24 verschobenem Kolben 22 abdichtend gegen das Dichtelement 32.

Die Verbindung zwischen der Druckkammer 26 und der Schließstelle 28 erfolgt über einen Ringkanal 38, der die Kolbenstange 30 umgibt und außen von einem Halteeinsatz 40 begrenzt ist, der einen axialen Halt für das Dichtelement 32 bildet.

Die Druckfeder ist in Fig. 1 - 4 jeweils alternativ in Form einer Schraubenfeder 24 (rechte Abbildungshälften) und in Form eines eingeschlossenen Druckgaspolsters 27 (linke Zeichnungshälften) dargestellt.

Die Abdichtung des Raumes (25) zur Aufnahme der Schraubenfeder 24 zwischen dem Gehäuse 16 und dem Kolben 22 erfolgt über einen O-Ring 42 zwischen dem Kolben 22 und der Innenwandung des Gehäuses 16 und zwei weiteren O-Ringen zwischen einem in das Gehäuse eingefügten Halteelement 44, das auch zur Abstützung der Schraubenfeder 24 dient, und der Innenwandung des Gehäuses 16 bzw. der Außenwandung der Kolbenstange 30 in diesem Bereich. Ein Anschlag 46 begrenzt den Hub des Kolbens 22 im Bereich des Gehäuseeinsatzes 20, während ein zweiter, gehäuseseitig vorgesehener Anschlag 48 den Hub des Kolbens 22 in der geöffneten Stellung begrenzt.

Das Ausströmen des Aerosols erfolgt zunächst durch ein Rohr oder einen Schlauch 50, der bis in Bodennähe der Aerosolsprühdose reicht, einen Gehäusestutzen 52, der in die das Schließelement 34 aufnehmende Kammer des Gehäuses 16 mündet, weiter durch Schlitze 54 in der Stirnfläche des Anschlags 48, die auch bei Anlage am zweiten Anschlag 48 einen Öffnungsquerschnitt bereithalten, durch Längsnuten (53) im Gehäuse 16, außen am Umfang des Schließelements 34 vorbei durch zweite Schlitze 56 im Stirnbereich der Kolbenstange 30 in eine mittige Bohrung 58 in der Kolbenstange bis zu dem an sich bekannten Sprühventil 14 mit seinem Sprühkopf (nicht näher dargestellt). Der zwischen der Schließstelle 28 und dem Sprühventil 14 einzustellende Regeldruck wirkt über den Ringkanal 38 auch in der Druckkammer 26, ohne daß diese von dem Aerosol durchströmt wird. Ein Austausch des Aerosols in der Druckkammer 26 findet durch ein Ein- und Ausströmen bei Hubbewegungen des Kolbens 22 statt. Es ist auch denkbar, die Druckkammer kontinuierlich zu durchströmen, wenn die Eintrittsöffnung der mittigen Bohrung 58 im Bereich der Druckkammer 26 angeordnet ist.

Bei der in Fig. 1 gezeigten Ausgangsstellung des Druckreduzierventils ist die Dose noch nicht befüllt, d. h. das Doseninnere ist drucklos, und die Druckfeder 24 kann den Kolben 22 und das Schließelement 34 gegen den zweiten Anschlag 48 verschieben, so daß die Verbindung zwischen dem Sprühventil 14 und dem Doseninneren frei ist. Die Sicherheitsfeder 36 wird unter dem Druck der stärkeren Feder 24 des Kolbens 22 komprimiert.

Zur Befüllung der Dose ist es möglich, mit Hilfe eines Niederhalters 60, der hier durch den sogenannten Stem gebildet ist, den Kolben 22 mechanisch in dieser geöffneten Stellung zu halten, um die Dose zur Beschleunigung des Füllvorgangs mit einem hohen Fülldruck beaufschlagen zu können, ohne daß es infolge des in dem Druckreduzierventil 10 ansteigenden Druck zu einer Querschnittsverkleinerung an der Schließstelle 28 kommt. Nach Beendigung des Füllvorgangs wird der Niederhalter 60 freigegeben, so daß sich der Kolben unter dem hohen Innendruck in der Aerosolsprühdose von beispielsweise 10 bar in seine in Fig. 2 gezeigte Stellung verlagern kann. In dieser Stellung hebt die Kolbenstange 30 von der Stirnfläche des Schließelements 34 ab, und dieses wird unter der Last ihrer Sicherheitsfeder 36 und unter Unterstützung durch den Doseninnendruck gegen das Dichtelement 32 gepreßt, sobald in der Druckkammer 26 der gewünschte Regulierdruck von ungefähr 3 bar erreicht ist.

Fällt nach einem Öffnen des Sprühventils 14 der Druck im Bereich zwischen dem Sprühventil 14 und der Schließstelle 28 ab, sinkt die durch den Druck auf den Kolben 22 ausgeübte Kraft, so daß die Druckfeder 24 wiederum beginnt, den Kolben unter Mitnahme des Schließelements 34 zu verlagern, bis nach dem Abheben des Schließelements 34 von dem Dichtelement 32 und dem möglichen Zustrom von Aerosol sich wieder der Regeldruck in der Druckkammer 26 eingestellt hat, der zum Verschließen der Schließstelle 28 führt. Bei einem kontinuierlichen Versprühen des Doseninhalts stellt sich im Bereich der Schließstelle 28 ein Gleichgewicht ein, das für den gewünschten Druckabfall sorgt, ohne daß es zu einer sich ständig wiederholenden Schließbewegung des Kolbens 22 kommt.

Zur Verbesserung der Regelgenauigkeit ist es wünschenswert, einen möglichst großen Kolbendurchmesser vorzusehen, wobei selbstverständlich die Kraft der Druckfeder 24 an den gewünschten Regeldruck anzupassen ist.

In Fig. 3 ist im Querschnitt eine weitere Ausführungsform eines Druckreduzierventils 110 dargestellt, die in wesentlichen Teilen mit der in Fig. 1 und 2 gezeigten Ausführungsform übereinstimmt. Gleiche Teile sind daher auch mit den gleichen Bezugszeichen versehen.

Unterschiede bestehen im Bereich einer abweichend ausgeführten Schließstelle 128 und einer in ihrem unteren Bereich 156 modifizierten Kolbenstange 130, die gemeinsam mit einer zwischen einem Haltereinsatz 140 und einem Gehäuseabsatz 141 eingespannten Dichtungsscheibe 132 die Schließstelle 128 bildet. Die wiederum mit einem einer Bohrung 58 versehene Kolbenstange 130 ist an ihrer Stirnseite 131 verschlossen, wobei im Bereich des Gehäuseanschlages 48 wiederum Schlitze 154 vorgesehen sind, die das Einströmen von Aerosol aus dem Gehäusestutzen 52 in eine im Bereich der Schließstelle vorgesehene Ringkammer 129 ermöglicht.

Die Kolbenstange verfügt über eine erste Radialbohrung 137, die in geöffneter Stellung des Kolbens 22 eine Verbindung zwischen der Ringkammer 129 und der Bohrung 58 des Kolbens 22 herstellt. Eine zweite Radialbohrung sorgt für eine Verbindung zwischen der Bohrung 58 in dem Kolben 22 und der Druckkammer 26, um die gewünschte Druckregulierung, wie sie im Zusammenhang mit Fig. 1 und 2 bereits erläutert worden ist, durchführen zu können.

Bei der in Fig. 3 gezeigten Stellung, die das Druckreduzierventil 110 bei unbefüllter, druckloser Sprühdose einnimmt, sitzt der Kolben mit seiner Kolbenstange 130 an dem zweiten Gehäuseanschlag 48 unter der Last seiner Druckfeder 24 auf. Die erste Radialbohrung 137 liegt dabei axial versetzt zur Dichtungsscheibe 132, so daß ihr Querschnitt freiliegt.

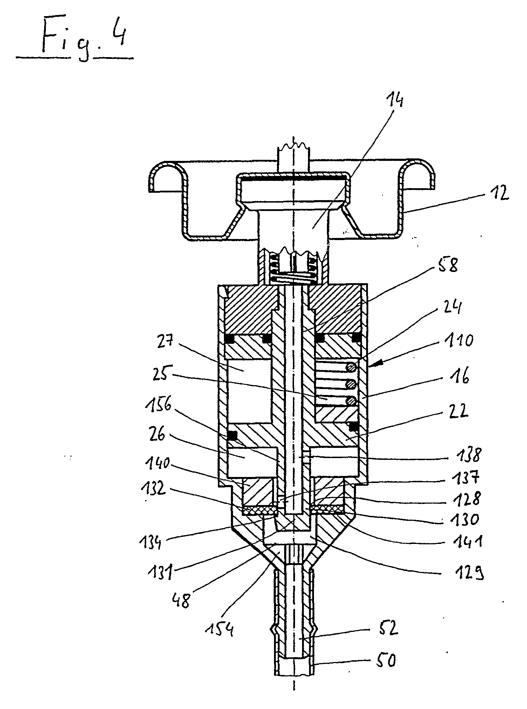

Nach einer Druckbefüllung der Sprühdose, die wiederum gegebenenfalls unter Zuhilfenahme des Niederhalters 60 erfolgt, der den Kolben 22 in einer den Öffnungsquerschnitt der Schließstelle 128 vergrößernden Position festhält, nimmt der Kolben die in Fig. 4 dargestellte Position ein, in welcher der in der Druckkammer 26 vorherrschende Druck den Kolben gegen die Last der Druckfeder 24 verschiebt, so daß sich die Radialbohrung 137 in einen Bereich stromabwärts der Dichtungsscheibe 132 bewegt, die an dem Außenumfang der Kolbenstange 130 abdichtend anliegt und dadurch den hohen Doseninnendruck von ungefähr 10 bar, wie er im Gehäusestutzen 52 vorherrscht, gegen die Bereiche stromabwärts der Dichtungsscheibe 132 bis zum Sprühventil 14 mit einem Regeldruck von ungefähr 3 bar abdichtet. Ein Mitnehmerhaken 134, der auch ringförmig über den gesamten Umfang ausgebildet sein kann, sorgt dabei für eine optimale Positionierung der Dichtungsscheibe, um eine langfristig gute Dichtwirkung sicherzustellen.

Selbstverständlich sind weitere Ausbildungen von Einzelheiten denkbar, beispielsweise kann die Radialbohrung 138 bei der in Fig. 1 und 2 gezeigten Ausführungsform den Ringkanal 38 ersetzen oder ergänzend vorgesehen sein und, wie bereits erwähnt, können neben Schraubenfedern 25 auch Gasdruckfedern mit entsprechenden Kennlinien verwendet werden. Generell kann die Regelgenauigkeit dadurch verbessert werden, daß man das Durchmesserverhältnis zwischen der durch den O-Ring 42 gebildeten Dichtstelle und der durch das Dichtelement 32 bzw. die Dichtungsscheibe 132 im Bereich der Schließstellen 28, 128 vergrößert. Da der Durchmesser des Dichtelements 32 bzw. der Dichtungsscheibe 132 nicht beliebig verkleinert werden kann, kann ein vergrößerter Kolbendurchmesser sinnvoll sein, wobei allerdings das Dosenvolumen nicht zu sehr eingeschränkt werden soll. Für die meisten Anwendungsfälle hat es sich als hinreichend erwiesen, einen Regeldruck zwischen 2 und 3 bar anzustreben, wobei Schwankungen in diesem Bereich unbedenklich sind und sich mit praxisgerechten Geometrieverhältnissen einfach erreichen lassen.

Das Druckreduzierventil 10 muß nicht notwendigerweise eine bauliche Einheit mit dem Sprühventil bilden. Vielmehr ist es denkbar, das Druckreduzierventil separat zu fertigen und dann mittels eines Schlauches oder Rohres dem Sprühventil vorzuschalten. Zwar ist die Ausbildung eines Niederhalters dann nur bedingt möglich, allerdings besteht die Möglichkeit, auf vorhandene Herstellungsanlagen von Ventiltellern mit Sprühventilen zurückzugreifen.

## Patentansprüche

1. Aerosolsprühdose mit einem Druckreduzierventil (10; 110) zwischen dem Doseninneren und einem verschließbaren Sprühventil (14), wobei in Ausströmrichtung hinter einer Schließstelle (28; 128) zur Druckregulierung eine Druckkammer (26) vorgesehen ist, in welcher ein Kolben (22) beweglich ist, der bei über den Regeldruck ansteigendem Druck in der Druckkammer (26) die Schließstelle (28; 128) gegen die Last einer Feder (24), z. B. einer Schraubenfeder (25) oder einer Druckgasfeder (27), verschließt, **dadurch gekennzeichnet, daß** die Verbindung zwischen der Schließstelle (28; 128) und dem Sprühventil (14) über eine mittige Bohrung (58) in dem Kolben (22) erfolgt.

2. Aerosolsprühdose nach Anspruch 1, **dadurch gekennzeichnet, daß** die Druckkammer frei von Durchströmung angeordnet ist.

3. Aerosolsprühdose nach Anspruch 1 oder 2, **dadurch gekennzeichnet, daß** der Kolben (22) bei in der Sprühdose montiertem Druckreduzierventil (10; 110) von außen derart zugänglich ist, daß er mechanisch in seine die Schließstelle (28; 128) freigebende Position beweglich ist und vorzugsweise ein Endanschlag (48) zur Begrenzung eines Öffnungshubes des Kolbens (22) vorgesehen ist.

4. Aerosolsprühdose nach einem der Ansprüche 1 bis 3, **dadurch gekennzeichnet, daß** die.Schließstelle (28; 128) zwischen einem an einem Gehäuse (16) festgelegten Dichtelement (32; 132) und einer Kolbenstange (130) oder einem separaten, axial durch den Kolben (22; 30) beweglichen Element (34) gebildet ist, wobei vorzugsweise das Dichtelement (132) am Außenumfang der Kolbenstange (130) anliegt und in der Schließstellung eine radiale Öffnung (137) zu der mittigen Bohrung (58) zum Doseninneren hin abdichtet oder zur Bildung der Schließstelle (28) ein separates Schließelement (34) vorgesehen ist, das durch eine Kolbenstange (30) bei Druckabfall in eine von dem Dichtelement (32) angehobene Stellung beweglich ist.

5. Aerosolsprühdose nach Anspruch 4, **dadurch gekennzeichnet, daß** die Druckkammer (26) die Kolbenstange (30; 130) bereichsweise umgibt und eine Radialbohrung (138) zur Verbindung der Druckkammer (26) mit der Bohrung (58) in der Kolbenstange (30; 130) vorgesehen ist.

6. Aerosolsprühdose nach Anspruch 4 oder 5, **dadurch gekennzeichnet, daß** die Kolbenstange (30) in ihrem Stirnbereich offen und seitlich geschlitzt ist.

7. Aerosolsprühdose nach einem der Ansprüche 4 bis 6, **dadurch gekennzeichnet, daß** eine Soll-Öffnungsstelle vorgesehen ist, die bei Druckbeaufschlagung von außen mit einem den Doseninnendruck erheblich übersteigenden Druck eine Öffnung zum Doseninneren freigibt, wobei vorzugsweise das Dichtelement (132) bei einer den Doseninnendruck erheblich übersteigenden Druckbeaufschlagung von außen die Schließstelle (128) freigibt.

8. Aerosolsprühdose nach einem der Ansprüche 4 bis 7, **dadurch gekennzeichnet, daß** die Außenwandung des das Dichtelement (32; 132) haltenden Gehäuses (16) innenseitig die Druckkammer (26) begrenzt und vorzugsweise zwischen dem Gehäuse (16, 20, 44) und dem Kolben (22) eine Schraubenfeder (24) oder eine Druckgasfeder angeordnet ist, wobei der Raum zwischen dem Gehäuse (16, 20, 44) und dem Kolben (22), in welchem das Federelement (24) angeordnet ist, vorzugsweise druckdicht zum Doseninneren abgedichtet ist.

9. Aerosolsprühdose nach Anspruch 8, **dadurch gekennzeichnet, daß** als Gegenhalt der Feder (24) gehäuseseitig ein Einsatz (20, 44) mit der Zylinderwandung des Gehäuses (16) verrastet, verpreßt, verschweißt und/oder verklebt ist.

10. Druckreduzierventil zum Einsatz in einer Aerosolsprühdose mit einer in Ausströmrichtung hinter einer Schließstelle zur Druckregulierung vorgesehenen Druckkammer, in welcher ein Kolben beweglich ist, der bei über den Regeldruck ansteigendem Druck in der Druckkammer die Schließstelle gegen die Last einer Feder, z. B. einer Schraubenfeder oder einer Druckgasfeder, verschließt, **dadurch gekennzeichnet, daß** es mittels eines Schlauches, Rohres oder dgl. einem Sprühventil vorschaltbar ist und die Verbindung zwischen der Schließstelle und dem Sprühventil über eine mittige Bohrung in dem Kolben erfolgt.

## Claims

1. An aerosol spray can with a pressure reduction valve (10, 110) between the can interior and a closeable spray valve (14), wherein, viewed in the outflow direction downstream of a closing site (28, 128), a pressure chamber (26) is provided for pressure regulation, in which a piston (22) can be moved which closes the closing site (28, 128) against the force of a spring (24), for example a helical spring (25) or a gas pressure spring (27) when pressure in the pressure chamber (22) rises above the standard pressure, **characterized in that** the connection between the closing site (28, 128) and the spray valve (14) takes place via a central bore (58) in the piston (22).

2. The aerosol spray can in accordance with claim 1, **characterized in that** the pressure chamber is arranged outside of the flow-through.

3. The aerosol spray can in accordance with claim 1 or 2, **characterized in that**, with the pressure control valve (10, 110) mounted in the aerosol can, the piston (22) is accessible from the outside in such a way that it can be mechanically moved into its position in which it releases the closing site (28, 128), and a final stop (48) for limiting the opening stroke is preferably provided.

4. The aerosol spray can in accordance with one of claims 1 to 3, **characterized in that** the closing site (28, 128) is formed between a sealing element (32, 132) fixed on a housing (16) and a piston rod (132), or a separate element (34), which can be axially moved by the piston (22, 30), wherein the sealing element (132) preferably rests against the outer circumference of the piston rod (130) and in the sealing position seals a radial opening (137) in the central bore (58) towards the can interior, or a separate closing element (34) is provided for constituting the closing site (28), which can be moved by means of a piston rod (30) into a position in which it is lifted off the sealing element (32) when a pressure drop occurs.

5. The aerosol spray can in accordance with one of the preceding claims, **characterized in that** the pressure chamber (26) extends around some areas of the piston rod (30, 130), and a radial bore (138) is provided for connecting the pressure chamber (26) with the bore (58) in the piston rod (30, 130).

6. The aerosol spray can in accordance with one of the preceding claims, **characterized in that** in its front area the piston rod (30) is open and has lateral slits.

7. The aerosol spray can in accordance with one of the preceding claims, **characterized in that** a predetermined opening point is provided which, in case of a pressure charge from the outside of a pressure which considerably exceeds the interior can pressure, releases an opening toward the can interior, wherein the sealing element (132) preferably releases the closing site (128) in case of a pressure charge form the outside which considerably exceeds the interior can pressure.

8. The aerosol spray can in accordance with one of the preceding claims, **characterized in that** the outer wall of the housing (16) supporting the sealing element (32, 132) delimits the pressure chamber (26) on the inside, and wherein preferably a helical spring (24) or a pressure gas spring is arranged between the housing (16, 20, 44) and the piston (22), wherein the space between the housing (16, 20, 44) and the piston (22) in which the spring element (24) is arranged, is preferably pressure-sealed against the can interior.

9. The aerosol spray can in accordance with claim 8, **characterized in that** an insert (20, 44) is locked, pressed, welded and/or glued together with the cylinder wall of the housing (16) for supporting the spring (24) on the housing.

10. A pressure reduction valve for employment with an aerosol spray can wherein, viewed in the outflow direction downstream of a closing site, a pressure chamber is provided for pressure regulation, in which a piston can be moved which, when pressure in the pressure chamber rises above the standard pressure, closes the closing site against the force of a spring, for example a helical spring or a gas pressure spring, **characterized in that** it can be connected upstream by means of a hose, tube, or the like, and that the connection between the closing point and the spray valve takes place via a central bore in the piston.

## Revendications

1. Bombe aérosol munie d'un détendeur (10 ; 110) monté entre l'intérieur de la bombe et une soupape de pulvérisation (14) obturable, avec par rapport à la direction de l'écoulement, une chambre de pression (26) prévue en aval, d'un point de fermeture (28 ; 128) pour réguler la pression, et dans laquelle peut se déplacer un piston (22) qui, quand la pression dans la chambre de pression (26) dépasse la valeur de réglage, obture le point de fermeture (28 ; 128) contre l'action d'un ressort (24), par exemple un ressort hélicoïdal (25) ou un ressort à pression de gaz (27),
**caractérisée en ce que**
la liaison entre le point de fermeture (28 ; 128) et la soupape de pulvérisation (14) est assurée par un alésage central (58) prévu dans le piston (22).

2. Bombe aérosol selon la revendication 1,
**caractérisée en ce qu'**
aucun écoulement ne traverse la chambre de pression.

3. Bombe aérosol selon la revendication 1 ou 2,
**caractérisée en ce que**
le piston (22), quand le détendeur (10 ; 110) est monté dans la bombe aérosol, est accessible de l'extérieur, de manière qu'il peut être déplacé mécaniquement pour venir dans sa position libérant le point de fermeture (28 ; 128), avec de préférence une butée d'extrémité (48) pour limiter la course d'ouverture du piston (22).

4. Bombe aérosol selon une des revendications 1 à 3,
**caractérisée en ce que**
le point de fermeture (28 ; 128) est formé entre un élément d'étanchéité (32 ; 132) fixé à un boîtier (16) et une tige de piston (130) ou un élément (34) séparé que peut déplacer axialement le piston (22 ; 30), l'élément d'étanchéité (132) étant avantageusement en contact avec la périphérie externe de la tige de piston (130) et obturant, en position de fermeture, une ouverture radiale (137) conduisant à l'alésage central (58) aboutissant à l'intérieur, ou bien, pour former le point de fermeture (28) il est prévu un élément de fermeture séparé (34) qui, en cas de chute de pression, est amené par la tige de piston (30) à une position où il est soulevé au-dessus de l'élément d'étanchéité (32).

5. Bombe aérosol selon la revendication 4,
**caractérisée en ce que**
la chambre de pression (26) entoure localement la tige de piston (30 ; 130), et un alésage radial (138) relie la chambre de pression (26) à l'alésage (50) de la tige de piston (30 ; 130).

6. Bombe aérosol selon la revendication 4 ou 5,
**caractérisée en ce que**
dans sa zone frontale, la tige de piston (30) est, ouverte et fendue latéralement.

7. Bombe aérosol selon une des revendications 4 à 6,
**caractérisée en ce que**
quand on exerce de l'extérieur une pression dépassant fortement la pression interne de la bombe, un point d'ouverture de consigne libère une ouverture communiquant avec l'intérieur de la bombe, et de préférence quand on exerce de l'extérieur une pression dépassant la pression interne de la bombe, l'élément d'étanchéité (132) libère le point de fermeture (128).

8. Bombe aérosol selon une des revendications 4 à 7,
**caractérisée en ce que**
la paroi externe du boîtier (16) maintenant l'élément d'étanchéité (32 ; 132) limite intérieurement la chambre de pression (26), avec avantageusement entre le boîtier (16 ; 20 ; 44) et le piston (22) un ressort hélicoïdal (24) ou un ressort à pression de gaz, et l'espace compris entre le boîtier (16 ; 20 ; 44) et le piston (22) et logeant l'élément élastique (24) est de préférence étanché à la pression par rapport à l'intérieur de la bombe.

9. Bombe aérosol selon la revendication 8,
**caractérisée en ce que**
pour maintenir le ressort (24), un insert (20, 44) dans le boîtier (16) est relié à la paroi cylindrique de celui-ci par encliquetage, montage à force, soudage et/ou collage.

10. Détendeur pour utilisation dans une bombe aérosol avec, en aval d'un point de fermeture par rapport au sens de l'écoulement, une chambre de pression prévue pour régulariser la pression et dans laquelle peut se déplacer un piston qui obture le point de fermeture quand la pression dans la chambre de pression dépasse la valeur de réglage, contre l'action d'un ressort, par exemple un ressort hélicoïdal ou un ressort à pression de gaz,
**caractérisé en ce que**
par l'intermédiaire d'un tuyau ou d'un tube ou similaire, le détendeur peut être monté en amont d'une soupape de pulvérisation, la liaison entre cette soupape et le point de fermeture étant assurée par un alésage central prévu dans le piston.
